Europäisches Patentamt

European Patent Office

Office européen des brevets

(19)

(11) EP 0 765 264 B1

(12) **FASCICULE DE BREVET EUROPEEN**

(45) Date de publication et mention
de la délivrance du brevet:
**10.02.1999 Bulletin 1999/06**

(21) Numéro de dépôt: 95925023.4

(22) Date de dépôt: 07.07.1995

(51) Int Cl.⁶: **B62K 17/00**, B62M 1/12,
B62K 3/00

(86) Numéro de dépôt international:
**PCT/FR95/00911**

(87) Numéro de publication internationale:
**WO 96/01762 (25.01.1996 Gazette 1996/05)**

(54) **BICYCLETTE ERGONOMIQUE COMPACTE A PEDALES OSCILLANTES**

KOMPAKTES, ERGONOMISCHES FAHRRAD MIT SCHWINGENDEN PEDALEN

COMPACT ERGONOMIC BICYCLE WITH OSCILLATING PEDALS

(84) Etats contractants désignés:
**BE DE FR GB IT**

(30) Priorité: **11.07.1994 FR 9408695**

(43) Date de publication de la demande:
**02.04.1997 Bulletin 1997/14**

(73) Titulaire: **Mauclair, Michel**
**51200 Epernay (FR)**

(72) Inventeur: **Mauclair, Michel**
**51200 Epernay (FR)**

(74) Mandataire: **Debay, Yves**
**Cabinet Yves Debay,**
**122 Elysée 2**
**78170 La Celle Saint Cloud (FR)**

(56) Documents cités:
**WO-A-90/01443** **DE-A- 4 237 525**
**US-A- 5 280 936**

## Description

L'invention concerne une bicyclette ergonomique compacte à faible traînée aérodynamique de l'équipage, pourvue d'un appui dorsal, et mue par pédales oscillantes et manettes motrices d'appoint.

Il convient d'évoquer, préalablement, le conformisme historique de la bicyclette contemporaine, qui, pourtant, est en pleine évolution technologique pour ce qui concerne ses composants et ses matériaux, mais qui reste inconditionnellement attachée, depuis un siècle, aux concepts mécaniques primitifs du vélocipède dont elle est issue.

La configuration classique de la "Petite Reine", entretenue par toute une tradition, est profondément ancrée dans les esprits, au point d'apparaître immuable; Mais en réalité, l'analyse technique la démontre irrationnelle et très énergivore, en raison de certains de ses paramètres parfaitement antagonistes et sclérosants.

Il en va ainsi, par exemple, de l'ergonomie inadaptée du pédalier circulaire et de la configuration spatiale de l'équipage homme-machine responsable d'un freinage aérodynamique insupportable, qui sont porteurs de sévères handicaps que le cycliste combat désespérément au prix de postures contraignantes et insoutenables, en pédalant debout sur les pédales ou encore face contre terre, postures qui altèrent le rendement physiologique et musculaire.

L'affinage aérodynamique et dynamique de l'équipage, après la démonstration éclatante administrée par l'automobile, qui dispose, pourtant, d'une motricité incomparablement plus puissante, apparaît comme une nécessité absolue, qui ne doit pas seulement concerner le profilage ou l'allégement des équipements particuliers de la machine, mais qui doit intégrer l'ergonomie globale de l'équipage et les interactions des composants.

Certes, la haute technologie permettrait sans doute de grappiller encore quelques gains, mais il est illusoire d'espérer, à travers le maintien des concepts ancestraux en vigueur, une progression significative des performances, désormais tributaire d'une refonte générale conceptuelle incontournable.

La bicyclette contemporaine apparaît, en effet, très handicapée dans son évolution par :

- Le concept ergonomique archaïque de 1790 du cavalier chevauchant le "Célérifère", concept toujours en vigueur, qui perpétue la posture du cycliste chevauchant verticalement la monture, posture parfaitement absurde, puisqu'elle oppose au déplacement le tirant d'air aérodynamique maximum.

- Le concept de propulsion mécanique centenaire du pédalier à rotation circulaire, disposé entre les roues, près du sol, et à l'aplomb du cycliste, qui procure un mauvais rendement, à la fois mécanique, mais aussi musculaire, et un faible développement tributaire des grandes roues classiques très encombrantes.

Les études de configuration nouvelles, qui prennent en compte les lois de l'aérodynamique, ont déjà été conduites par les chercheurs, selon des postures distinctes, dites "couchées" ou horizontales :

- S'agissant du brevet **WO-A-90 01443 (IFFIU)**, le pédalier utilisé est encore à rotation circulaire disposé entre les deux roues mais devant le cycliste et cette disposition entraîne un allongement démesuré de la machine (2,40 m environ aggravé par la position variable du pédalier), un gain de poids important en rapport, une perte de maniabilité, un tube de direction dévoyé horizontalement nécessitant un joint de cardan avec le guidon en rotation dans les virages. On observe que le siège est fixe.

- S'agissant du brevet **DE 42 37 535 A1 (BECK)**, qui enseigne un cadre profilé équipé sur l'avant d'un pédalier, sur l'arrière d'une fourche, d'un amortisseur pour la fourche arrière et d'un siège, le pédalier étant positionné au-dessus de la roue avant et contre le tube de direction. Toutefois le pédalier utilisé est circulaire mais très éloigné au-dessus de la roue directrice afin d'assurer l'échappement des pieds et d'une poulie intermédiaire de tension du retour de la chaîne indispensable à ce système de traction avant, au motif selon l'auteur, de réduire l'effet de torsion de la chaîne à chaque rotation du guidon ; (sans pour autant annuler cet effet de torsion variable, et ses fâcheuses contraintes sur la chaîne ou courroie crantée).

On constate que, en virage cette configuration génère un conflit des genoux avec le guidon.

Ce problème ergonomique qui apparemment rend le système dangereux, est aggravé par la posture très haut perchée des pieds, responsable notamment d'une instabilité latérale rendant la conduite précaire dans l'embarras de la circulation, sur route glissante ou par vent de travers, de même que lors des démarrages en côte.

- S'agissant du brevet **US-A-5 280 936 (SCHMIDLIN)**, le mouvement retenu évoque celui d'un rameur mais avec un pédalier, disposé toujours entre les roues, à déplacement linéaire et alternatif sur chariot associé à un guidon animé en sens contraire mais indéconnectable.

On observe un allongement démesuré de la machine (**2,40m** environ) et ses inconvénients : une commande indirecte et précaire par câble de la direction, une perte d'énergie non récupérée due au ressort de rappel agissant sur la chaîne de traction, et, une traction discontinue avec un temps mort de **50%**.

D'autres recherches ergonomiques ont été poursuivies en vue de battre, notamment, le record de l'heure, mais elles proposent :

- Soit des machines, très encombrantes dépassant allègrement les deux mètres de longueur qui utilisent encore le concept du pédalier circulaire classique trop encombrant et responsable d'une hauteur excessive du centre de gravité du pédalier.

- Soit le concept utilisant les mouvements du rameur dont la traction est discontinue.

- Soit des astuces de position de recherche de vitesse telles que celles imaginées par le champion O'BREE, afin d'atténuer partiellement les défauts aérodynamiques, mais au prix de contorsions insoutenables inadaptées à la morphologie de l'homme et à l'utilisation courante.

Parmi les qualités de l'actuelle bicyclette, on peut citer la simplicité de la machine qui autorise, en outre, les postures acrobatiques, utiles aux vélocipèdes tout terrain (V.T.T.). Mais, pour la compétition ou l'usage courant sur route normale, ces postures n'offrent pas d'intérêt susceptible de compenser les défauts de la bicyclette classique les plus frappants, à savoir :

- La très mauvaise ergonomie de la posture verticale du cycliste face au déplacement, dont le tirant d'air oppose le frein aérodynamique maximum, qui croît en raison du carré de la vitesse. Ainsi, par exemple, sous un vent contraire de **20 km/h**, un cycliste roulant à **30 km/h** doit mobiliser jusqu'à **95** % de son énergie à vaincre la résistance de l'air.

- L'inconfort physiologique d'une posture inclinée vers l'avant, "face contre terre" pour tenter de réduire la prise au vent du buste et des bras sans parvenir à réduire celle des membres inférieurs, qui crée une gêne respiratoire la plus antagoniste du rendement musculaire.

- La fatigue inutile de cette posture contre nature, résultant du report du poids du corps sur les bras mobilisés inutilement.

- Les dépenses musculaires superflues de compensation du mauvais calage du bassin sur la selle, et de la configuration générale du vélo inadaptée à la morphologie humaine, en raison de l'absence de tout point d'appui matériel dorsal opposé aux forces verticales de réaction de poussée des jambes sur les pédales.

- La position du pédalier entre les roues, qui développe un pompage de l'énergie musculaire par le cadre soumis à une torsion exagérée qu'il est impossible de raidir sans dégrader ses capacités de souplesse et d'amortissement, nécessaires à la bonne tenue de route et au confort du cycliste.

- L'encombrement superflu de la bicyclettes et des roues en particulier.

- Le déplacement extravagant de chaque pied, qui développe une trajectoire circulaire de **1,07 m** de circonférence et une course verticale de **0,34 m**, qui peut être comparée à deux fois la hauteur d'une marche d'escalier normal.

- Le rendement très médiocre du pédalier classique :
  La force motrice **F1** résultante d'une poussée **F** sur l'une des pédales est, en chaque point de la trajectoire circulaire, calculable selon la relation : **F1=F cos.** béta.. (béta étant l'angle de rotation des pédales par rapport au plan vertical passant par son axe). Lorsque les pédales sont en position des extrêmes, haut et bas, le cosinus de l'angle béta de la poussée **F** est nul et la résultante motrice **F1** est nulle, ce qui constitue deux points morts diamétralement opposés. Il en résulte que la traction est discontinue.

- Enfin, le déphasage de la courbe de puissance de ce pédalier, par rapport à la courbe de puissance de pédalage du cycliste, attendu que la puissance maximum atteinte à mi-course, par le pédalier, correspond à une position encore trop fléchie des jambes, et que la puissance maximum développée par les jambes s'exprime en fin d'extension, c'est-à-dire au niveau du point mort inférieur du pédalier où la résultante motrice **F1** est nulle.
  Cette fâcheuse discordance explique la posture dite "en danseuse" adoptée par les coureurs en recherche de puissance, qui debout sur les pédales corrigent ce déphasage en faisant correspondre la position horizontale à mi-course des pédales avec la position en extension des jambes.

Mais cette posture précaire, qui génère une plus grande prise au vent, consomme énormément d'énergie musculaire.

Les essais de soufflerie montrent l'extrême importance que revêt l'ergonomie, qui conditionne étroitement les performances.

La présente invention a pour but de rémédier à ces inconvénients en adoptant les concepts ergonomiques et mécaniques qui concilient enfin le confort postural optimal et les hautes performances jusque la parfaitement inconciliables, que procure une machine compacte et légère, facile à piloter en course ou à conduire à la main et facile à régler et à transporter, ce qui consiste donc à créer une bicyclette avec laquelle, d'une part, le cycliste, face au déplacement, bien calé sur un siège en posture inclinée vers l'arrière, jambes et bras en position oblique vers l'avant, actionne un pédalier spécifique dont l'axe du pédalier est positionné au ras de la roue avant et contre le tube de direction, avec le guidon à hauteur des bras permettant, avec la prise directe des mains, un solide appui et une motricité d'appoint tirée de la transformation de l'énergie musculaire fournie par les bras, en énergie mécanique par couplage direct séparément ou en combinaison, d'un "MANETTIER" sur un pédalier oscillant du type de ceux décrits dans la demande de brevet français N° 94 08289 (MAUCLAIR) autorisant la translation des pieds selon un mouvement en arc de cercle, proche de l'horizontale, juste au-dessus de la roue avant, face au cycliste et dont la courbe de puissance est maximale et continue sur toute l'amplitude, elle-même en phase avec celle du pédalage et variable en course au gré de l'utilisateur.

La bicyclette ergonomique mue par pédales oscillantes selon l'invention, se caractérise principalement, en ce qu'elle comporte un cadre équipé sur l'avant d'un pédalier positionné au ras de la roue avant et contre le tube de direction d'un guidon positionné au-dessus du pédalier à hauteur des bras du cycliste, ledit cadre est surmonté d'un tube de siège, équipé d'une selle à dossier fixe ou articulé orientable selon différentes positions, dont au moins une posture inclinée vers l'arrière, ledit pédalier est oscillant, à cliquet et comporte des manivelles indépendantes animées d'un mouvement limité oscillant en arc de cercle comprenant un aller moteur et un retour inversé à la position de départ.

Selon une autre particularité, le mouvement limité oscillant en arc de cercle des manivelles indépendantes a une amplitude comprise entre 30° et 110°.

Selon une autre particularité, le cadre profilé est constitué d'une poutre-caisson aérodynamique, dans laquelle sont intégrés les faisceaux électriques et les commandes, ainsi qu'un tube de direction, la console du boîtier du pédalier oscillant, le tube de siège.

Selon une autre particularité, le cadre profilé est constitué d'une poutre caisson aérodynamique, dans laquelle sont intégrés les faisceaux électriques, la transmission et les commandes, ainsi qu'un tube de direction, la console du boîtier du pédalier oscillant, le tube de siège, le boîtier d'articulation de la fourche arrière et le garde-boue arrière.

Selon une autre particularité, le cadre profilé est constitué d'une poutre caisson aérodynamique, dans laquelle sont intégrés les faisceaux électriques, la transmission et les commandes, ainsi qu'un tube de direction, la console du boîtier du pédalier oscillant, le tube de siège, le boîtier d'articulation de la fourche arrière, le garde-boue arrière et le porte-bagages.

Selon une autre particularité, le cadre profilé est réalisé en deux parties, reliées par une charnière située en partie basse, dont les ailes s'emboîtent l'une dans l'autre avec solidarisation par verrouillage.

Selon une autre particularité, en situation repliée, la roue arrière vient se placer dans la fourche avant, à la place de la roue avant préalablement démontée.

Selon une autre particularité, la structure est constituée d'un cadre tubulaire dont le tube de siège est horizontal ou incliné selon un angle inférieur à 35° par rapport à l'horizontale et fendu à son extrémité et dans lequel coulisse la tige de selle bloquée en position par pincement de l'extrémité dudit tube par une vis ou d'une came.

Selon une autre particularité, le cadre profilé est constitué d'une structure tubulaire, dont le tube est incliné et fendu à son extrémité pour assurer le blocage par pincement de la tige de selle par l'intermédiaire d'une vis ou d'une came.

Selon une autre particularité, le dossier est rabattable vers l'arrière, avec rappel automatique vers l'avant par l'intermédiaire d'une articulation dotée d'un ressort de rappel constant, avec blocage selon trois positions principales, à l'aide d'une came actionnée par un levier.

Selon une autre particularité, le pédalier oscillant est relié à la roue avant par l'intermédiaire d'un cardan, d'un moyeu à changement de vitesse et d'une transmission par pignons et chaîne.

Selon une autre particularité, le cadre comporte sur l'arrière, une fourche articulée à débattement limité vers le haut par un amortisseur.

Selon une autre particularité, la fourche arrière articulée est constituée de deux bras en forme de diapason en cantilever, prenant appui intermédiaire sur une butée emboîtée sur un amortisseur solidaire du cadre.

Selon une autre particularité, les manettes constituant le guidon sont oscillantes et combinables à volonté avec le pédalier oscillant.

Selon une autre particularité, le dossier est orientable selon une position haute rapprochant les épaules du guidon manettier et facilitant le maniement des manettes d'avant en arrière.

Selon une autre particularité, la traction s'effectue à l'arrière par un plateau et un dérailleur, le mouvement de traction étant transmis soit par une chaîne soit par une courroie crantée ou un câble sans fin.

Selon une autre particularité, le cas d'une traction arrière et le boîtier d'articulation sur lequel est articulée la suspension arrière est positionné près de la ligne de chaîne et le débattement de la roue arrière est limité de façon à neutraliser l'effet de pompage de la suspension.

Selon une autre particularité, le cadre profilé est auto-pliable, en faisant basculer la fourche arrière articulée autour du boîtier afin de ramener la roue arrière vers la roue avant et contre le tube inférieur du cadre.

Quel que soit le mode de réalisation, le dossier est rabattable vers l'arrière avec le dos par l'intermédiaire d'une articulation dotée d'un ressort de rappel constant vers l'avant et d'un blocage selon trois positions principales, par l'intermédiaire d'une came actionnée par un levier.

Le pédalier oscillant peut être relié directement à la roue avant par l'intermédiaire d'un joint de cardan homocinétique, d'un moyeu de changement de vitesse et d'une transmission souple (chaîne ou courroie crantée).

La fourche arrière articulée est constituée d'une fourche en cantilever prenant appui intermédiaire sur une butée emboîtée sur un amortisseur solidaire du cadre, qui admet la suspension intégrale du garde boue porte-bagages. Cette fourche, après avoir été déboîtée, peut être repliée vers l'avant par rotation autour de son axe d'articulation.

Selon les deux premiers modes de réalisation, le cadre profilé est réalisé en deux parties, reliées par une charnière située en partie basse, dont les ailes s'emboîtent l'une dans l'autre avec solidarisation par verrouillage.

En situation repliée, la roue arrière vient se placer dans la fourche avant à la place de a roue avant préalablement déposée.

Les avantages obtenus, grâce à cette invention, procurent essentiellement :

- Des rendements ergonomiques et mécaniques nettement en hausse;
- Un tirant d'air minimum de l'équipage résultant du concept postural oblique du cycliste face au déplacement, qui diminue à la fois la traînée aérodynamique du corps et les turbulences de l'air isues du mouvement horizontal de pédalage des jambes, parallèle au déplacement.
- Le bon rendement physiologique et musculaire résultant de la posture oblique qui place les forces musculaires en présence naturellement dans le prolongement du pédalier et dans le sens convergent du buste et des quatre membres groupés et parallèles entre eux.
- L'appui dorsal, diamétralement opposé au pédalier, qui neutralise les forces réactives à la poussée des pieds, elles-mêmes opposées à celles de traction des bras sur le guidon, configuration qui optimise globalement l'efficacité musculaire.
- La stabilité du couple homme-machine, calé sur trois points d'appui en opposition dynamique dans l'espace que sont le pédalier à l'avant, le siège à l'arrière et le guidon au point le plus haut, qui, en outre, permet, avec l'impulsion des bras sur le guidon et des pieds en appui sur les pédales, le délestage alterné de chaque roue, et donc l'amortissement des inégalités du sol, ou le franchissement d'obstacles tels que les trottoirs.
- La suppression de tout report de poids du buste sur les bras enfin libérés de cette perte d'énergie.

     au profit de :

- L'appoint optionnel d'un transformateur d'énergie animé par les membres supérieurs, opportunément en prise directe sur la transmission déjà existante du pédalier.
- La compacité de la machine, qui optimise les capacités générales : légèreté, rigidité, faible tirant d'air, et qui ramène la longueur inférieure à celle d'une bicyclette classique.
- Du meilleur rendement du cadre, moins sollicité aux efforts de torsion du pédalier.
- Un port de tête bien d'aplomb avec un champ de vision du cycliste parfaitement dégagé avec le confort de la posture inclinée vers l'arrière sur un siège correctement surélevé par rapport au pédalier, avec les mains en appui direct sur le guidon face au cycliste à la manière des motocyclistes de la marque "Harley-Davidson".

D'autres caractéristiques et avantages apparaîtront dans la description qui va suivre de distincts modes de réalisation d'une bicyclette selon l'invention, donnés à titre d'exemple non limitatif au regard des dessins annexés sur lesquels :

- la figure 1 représente une vue principale schématique d'une bicyclette à cadre tubulaire, tube de selle horizontal et pédalier oscillant simple avec traction arrière sur plateaux et dérailleurs.
- la figure 2 représente une vue principale schématique d'une bicyclette selon la figure 1 mais avec suspension du triangle arrière articulée et garde-boue porte-bagages carénés.
- la figure 3 représente une vue en plan schématique de la bicyclette selon la figure 2.

- la figure 4 représente une vue de profil schématique de la bicyclette selon la figure 2.
- la figure 5 représente une vue principale schématique d'une bibyclette à cadre tubulaire, tube de selle très incliné, fourche arrière articulée suspendue en cantilever, pédalier oscillant simple avec traction arrière sur plateaux et dérailleurs et garde-boue porte-bagages carénés.
- La figure **6** représente une vue principale schématique d'une bicyclette à cadre composite pliable, tube de selle très incliné, fourche arrière articulée suspendue en cantilever, pédalier oscillant multiplicateur, traction arrière sur moyeu à **7** vitesses, et garde-boue porte-bagages carénés.
- La figure **7** représente une vue principale schématique d'une bicyclette selon la figure **6** mais avec manettier en action et bouclier caréné.
- La figure **8** représente une vue de dessus schématique de la bicyclette selon la figure **7**.
- La figure **9** représente une vue de profil schématique de la bicyclette selon la figure **7**.
- La figure **10** représente une vue de profil schématique d'une bicyclette à cadre composite, tube de selle très incliné, fourche arrière articulée suspendue en cantilever, pédalier oscillant simple, manettier au repos, traction avant sur moyeu à **7** vitesses et garde-boue porte-bagages carénés.
- La figure **11** représente une vue de profil schématique d'une transmission à traction avant avec joint à cardan homocinétique.
- La figure **12** représente une vue de côté en superposition de la bicyclette traditionnelle et de la bicyclette selon la présente invention.

On notera que le moyeu à 7 vitesses peut dans tous les cas être remplacé par un dérailleur et réciproquement.

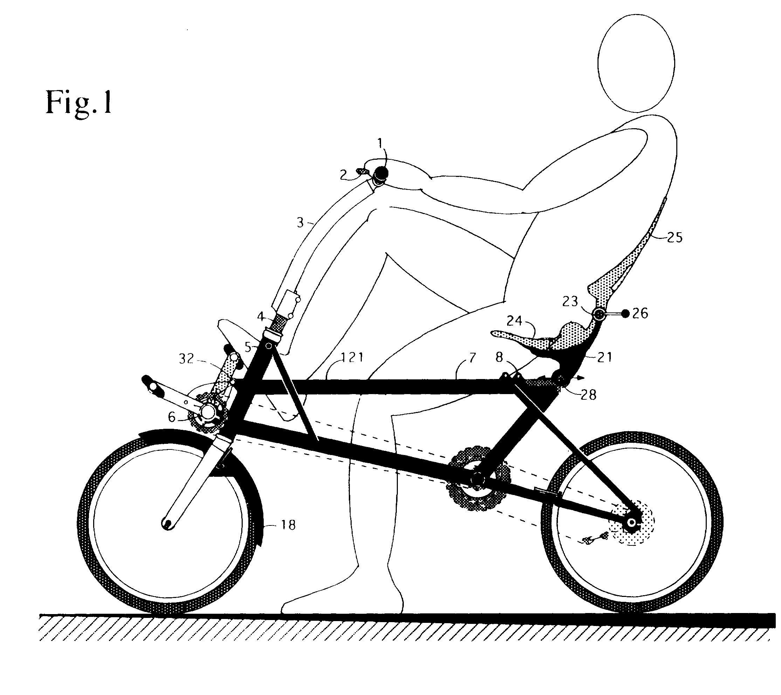

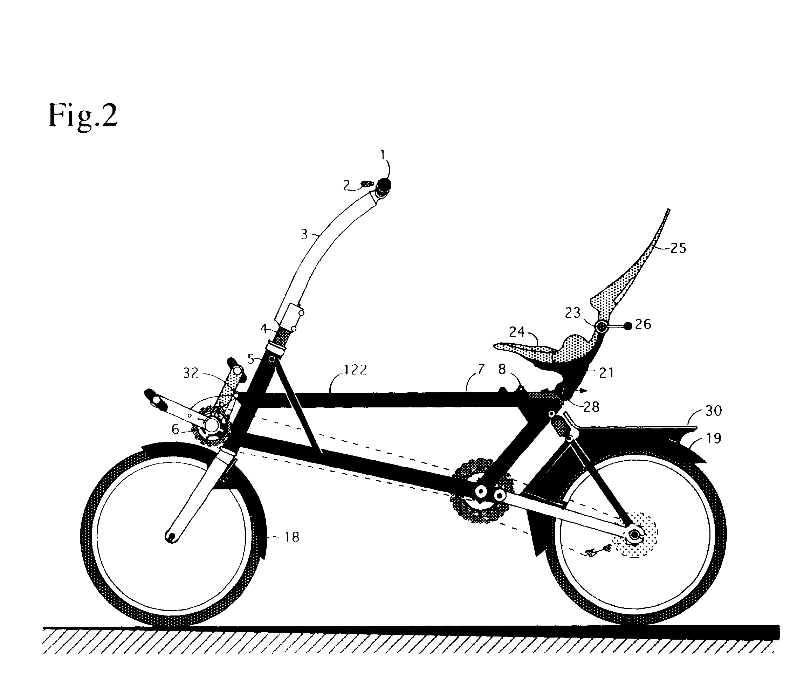

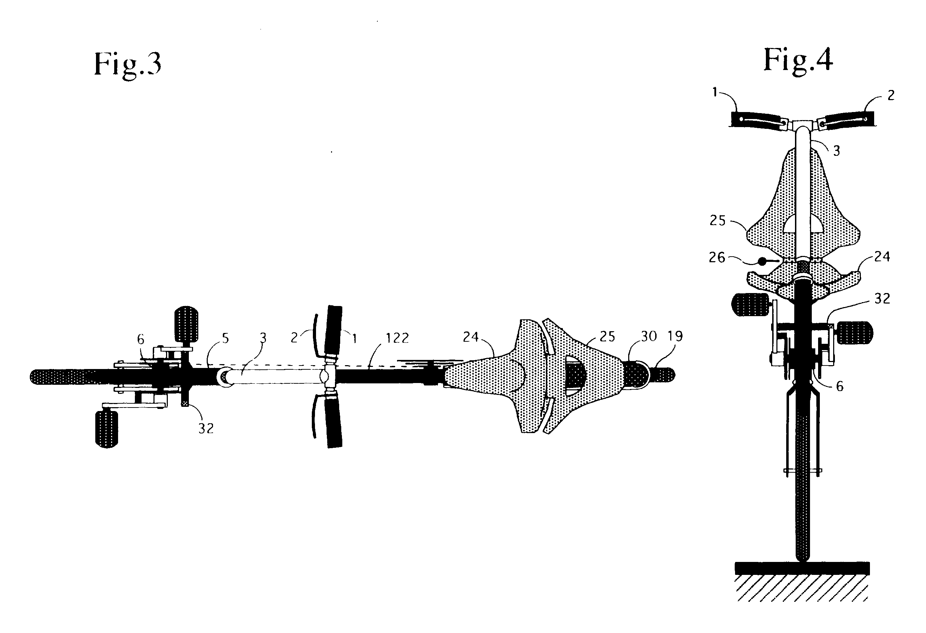

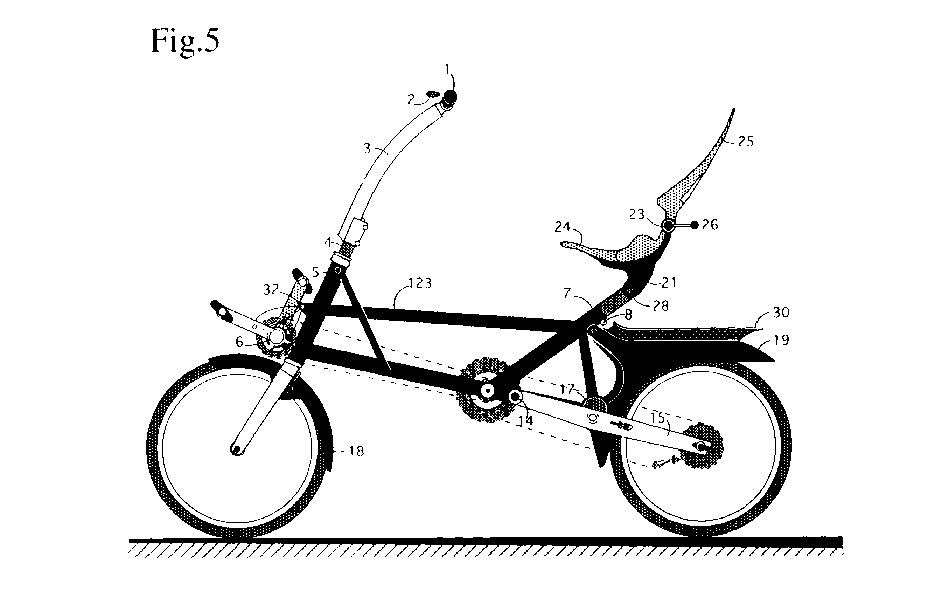

Les figures **1 à 5** représentent une bicyclette à cadre tubulaire **121-122-123** composé de tubes supérieurs et inférieurs, reliés par un contrefort oblique, se raccordant d'une part, à un tube de direction **5** traversé par la colonne de direction classique **4**, supportant la console du boîtier **6** de pédalier et le guidon **3** pourvu de poignées 1 et de leviers de commandes diverses **2**, et d'autres part, à un tube de siège **7** horizontal (figures **1-2**) ou fortement incliné, (figure **5**) fendu à son extrémité pour mettre en jeu un système de serrage à came ou à vis **8**, et, enfin un triangle arrière fixe (figure **1**) ou une suspension articulée (figures **2-5**) sur un boîtier **14**. Celle-ci se compose d'une fourche oscillante tirant la roue motrice, en forme de diapason **15**, soit (figure **2**) en appui d'extrémité sur deux haubans solidaires coudés, en butée contre un amortisseur **17** fixé sur le cadre, soit (figure **5**) en appui intermédiaire en cantilever sur un amortisseur **17** fixé sur le cadre.

On notera que l'appui en cantilever admet la suspension intégrale du garde-boue porte bagages, qui offre l'avantage d'une meilleure dynamique d'amortissement dont profite la tenue de route.

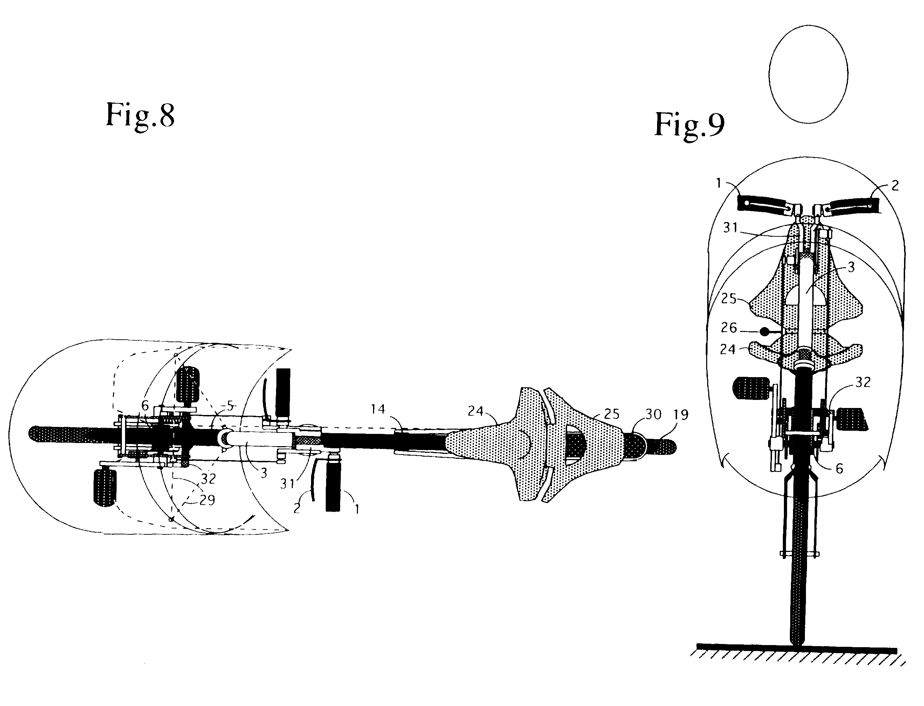

Le cadre, selon les figures **2 à 10**, est auto-pliable, en faisant basculer la fourche arrière articulée autour du boîtier **14**, afin de ramener la roue arrière vers la roue avant et contre le tube inférieur du cadre, associé à la dépose éventuelle du guidon **3** et du dossier **25** rabattable sur la selle **24**. Le cadre, selon les figures **2 à 10**, est équipé d'un garde-boue caréné **19** associé à un porte-bagages **30**.

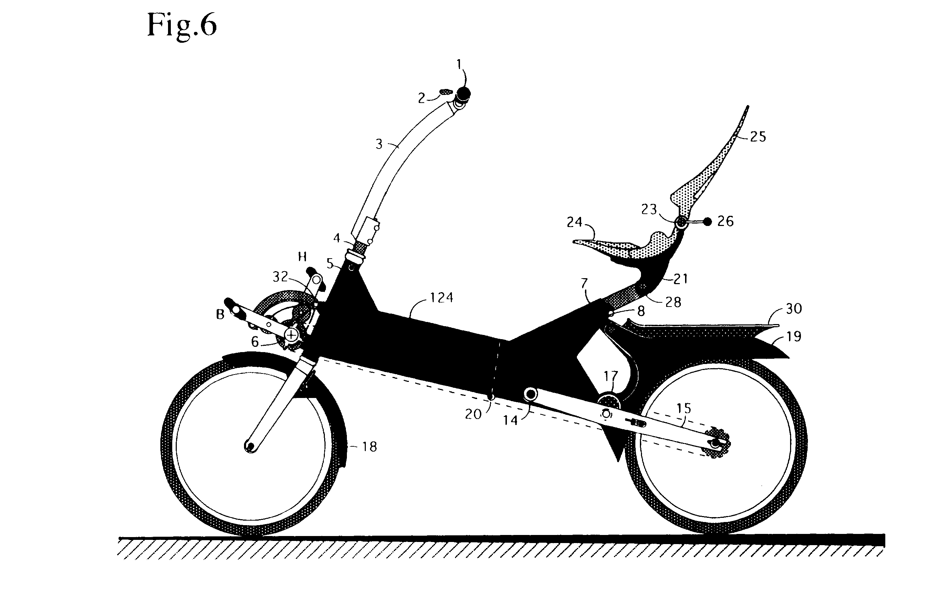

Les modes de réalisation correspondant aux figures **6 à 10** ont en commun d'être équipés d'un cadre composite monocoque ou mixte, comprenant une poutre-caisson **124,125** aérodynamique creuse, garnie de mousse expansée ou vide, qui peut intégrer, outre les batteries éventuelles et les faisceaux électriques ou mécaniques de commande, et les équipements annexes, d'une part, le tube de direction **5** traversé par la colonne de direction classique **4**, la console du boîtier **6** de pédalier et le guidon **3** pourvu de poignées **1** et de leviers de commandes diverses **2**, d'autre part, un tube de siège 7 fortement incliné, fendu à sa partie supérieure pour mettre en jeu un système de serrage à came ou à vis **8**, et, enfin, un boîtier **14** sur lequel est articulée la suspension arrière.

Celle-ci se compose d'un dispositif tirant la roue motrice, constitué d'une fourche **15** en forme de diapason en cantilever, emboîtée sur un amortisseur **17** contenu dans un boîtier solidaire du cadre.

Cet amortisseur est constitué d'un bloc élastomère ou d'un amortisseur mixte oléo-pneumatique, à dureté réglable.

Le débattement de la roue arrière est limité à quelques centimètres et le boîtier **14** est positionné près de la ligne de chaîne, afin de neutraliser l'effet de pompage de la suspension dû à la réaction de traction de la chaîne.

La colonne de direction classique **4** est pourvue d'une fourche dont l'angle de direction (**A°**), le rayon (**r**) de la roue, le déport (**D**) et la valeur (**C**) de la chasse auront pour relation la formule :

$$C = r / tgA° - D / sinA°$$

Ainsi pour **A° = 65°**
avec **r = 225 mm** et avec **D = 40 MM**, on obtient **C = 60,74 mm,**
avec **D = 50 mm**, on obtient **C = 49,70 mm.**

Sont intégrés au cadre, les garde-boue **18** et **19**, constitués d'une coque profilée. Le garde-boue avant **18** est prolongé de deux ailes profilées flexibles au droit de la fourche qui se clipsent dans celle-ci. Le garde-boue arrière **19** offre, selon la figure **2**, une coque très résistante solidement fixée soit sur le triangle arrière, soit, selon les figures **5 à 10**, clipsée sur le tube de selle et le boîtier d'amortisseur **17**, et supporte un porte-bagages **30** (figures **2 à 10**) doté d'une plate-forme horizontale d'amarrage clipsée ou incorporée au garde-boue **19.**

A partir du cadre composite monocoque ou mixte, avec ou sans suspension arrière, déjà cité, le corps du caisson **124** est sectionné en deux parties montées sur une charnière **20** dont l'axe horizontal est disposé en partie basse, dont les ailes, en butée, viennent s'emboîter entre-elles, avant d'être verrouillées en partie haute par un dispositif qui solidarise les deux parties (goupille, crochet ou bride à levier).

Le dispositif pliable consiste à faire basculer, autour de la charnière **20**, le train arrière, afin d'engager la roue arrière dans la fourche avant, libérée de sa roue, tandis que la chaîne, qui s'enroule autour d'un appui situé à coté ou sur la charnière **20** (figures **6 à 7**), reste maintenue en place.

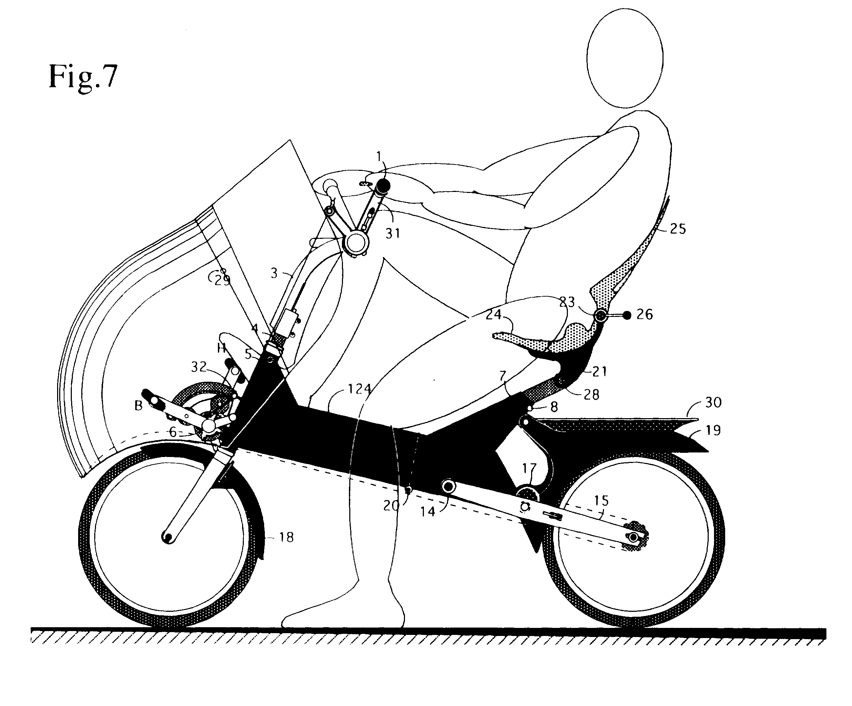

L'encombrement de la bicyclette non pliée (pour adulte de grande taille : **1,84,** avec le modèle à roues de **450 mm** de diamètre), offre un encombrement modéré estimé à environ **1,60 x 1,10 x 0,36** sans carénage (figures **1 à 6**) et **1,64 x 1,22 x 0,48** avec bouclier et visière (figures **7 à 8**).

La selle **24** équipant l'ensemble de ces modes de réalisation, en forme de coque moulée profilée et percée d'aérations, est réalisée en matériau plastique ou composite ultra léger.

La selle **24**, réglable, est pourvue d'un dossier ergonomique fixe ou basculant **25**. Il combine la configuration de la selle et celle du siège baquet. Il procure un appui lombaire et dorsal opposé aux forces de réactions de poussée des pieds.

La selle **24** se compose, comme le montrent les figures **1 à 3** :

- D'une tige de selle, qui plonge dans le tube de siège 7 horizontal ou très incliné, règlant l'éloignement de la selle **24** avec le pédalier, selon la taille du cycliste, et équipée d'un blocage à vis ou rapide à came **8**; cette tige de selle se termine, en partie haute, par une potence aérodynamique moulée **21**, supportant la selle **24** et l'axe d'articulation **23** du dossier **25.**

- D'une selle **24,** étroite vers l'avant pour le passage latéral des cuisses lorsque les deux pieds sont à terre, élargie vers l'arrière pour le calage latéral et lombaire du bassin; l'inclinaison de la selle **24** vers l'arrière reste constante, mais peut être réglée en option à l'aide d'une articulation **28** dotée d'un système à blocage à vis ou rapide.

- D'un dossier ergonomique **25** dorsal, fixe ou basculant autour de l'articulation **23** pourvue d'un ressort de rappel constant vers l'avant et contrôlée par un levier **26** à commande de blocage rapide à came, qui assure trois positions, à savoir :

  • la position basse vers l'arrière, qui correspond à une posture fortement inclinée en direction des lignes de fuite, permet de réduire le tirant d'air en vue de soutenir les vitesses les plus élevées.

  • la position haute rapproche les épaules du guidon-manettier et facilite son maniement d'avant en arrière, en côte notamment.

  • La position basse vers l'avant, utilisée pour le transport, permet d'emboîter le dossier sur la selle conçue en conséquence, qui ramène l'encombrement de l'ensemble à **0,34 x 0,30 x 0,15 m**.

La compacité de la machine et la posture oblique du cycliste permettent l'intégration d'un bouclier frontal aérodynamique optionnel, qui améliore le facteur aérodynamique et assure le carénage de l'équipage, sans enfermer le cycliste qui reste au contact de la nature.

Le bouclier proposé est composé d'une coque rigide, dont la forme ovoïde est intrinsèquement aérodynamique au vent frontal et latéral, en tôle emboutie ou en matériau composite moulé monobloc ou segmenté suivant des plans verticaux parallèles au cadre, soit en deux demi-coquilles, soit en trois éléments ou davantage, pourvus de rainures et languettes emboîtables par pression des doigts et verrouillées à l'aide d'un système de fermeture à glissière comprenant deux lèvres souples se joignant, serties à l'aide d'un curseur.

Cette coque opaque ou transparente est dotée d'une visière amovible, constituée d'une feuille de plastique transparente semi-rigide, emboîtée dans une rainure en bordure de la coquet ou fixée en applique sur une bande velcro ou par une fermeture à glissière.

une autre version du bouclier ovoïde comprend une capote tendue sur des arceaux cintrés se déployant en éventail et se repliant à plat dans un même plan.

La paroi inférieure de ce bouclier en forme concave qui est prolongée jusqu'au pédalier, est pourvue d'échancrures latérales pour le passage des talons de pieds.

L'ancrage de ce bouclier amovible est assuré sur quatre points d'appui, à savoir :

- La paroi inférieure en deux points sur le boîtier de pédalier.

- La coque supérieure par des tiges de maintien **29**, ancrées sur celle-ci et verrouillées sur des clips montés aux extrémités de la traverse fixe **32** du pédalier, et sur le tube de direction.

Le pédalier à pédales oscillantes est proposé dans les modes de réalisation décrits et revendiqués dans la demande de brevet français **n° 94 08289,** soit le pédalier oscillant simple à cliquet (P.O.S), soit le pédalier oscillant multiplicateur à cliquet (P.O.M).

Ainsi, selon ce brevet, ces pédaliers s'apparentent au pédalier rotatif classique, mais les manivelles indépendantes sont animées d'un mouvement non pas rotatif mais oscillant et chaque cycle comprend un aller moteur, durant lequel s'exerce la poussée du pied sur la pédale, et un retour inversé à la position de départ.

Le pédalier oscillant assure la même fonction qu'un pédalier classique, mais améliore notablement, d'une part, le rendement et, d'autre part, l'ergonomie générale de la bicyclette.

Le rendement **R** du pédalier, selon le brevet, est donné par le rapport entre la force résultante motrice **F1** et la force de poussée **F** appliquée à la pédale selon la formule : **R = Σ F1 / Σ F** avec **F1 = cos béta**, qui donne les résultats suivants:

| Amplitude de pédalage: | 360° | 110° | 90° | 60° | 50° | 30° |
|---|---|---|---|---|---|---|
| Rendement du Pédalier circulaire R= | 0.64 | - | - | - | - | - |
| Rendement du P.O.S ou du P.O.M. R= | - | 0.85 | 0,90 | 0,95 | 0,97 | 0,99 |

On notera :

- Que le rendement théorique d'un pédalier circulaire n'est que de 64%, et que celui d'un P.O.S. ou d'un P.O.M. calé à **90°** est de **90%.**

- Que le rapport **0,90 / 0,64 = 1,406** démontre un gain théorique de rendement de **+ 40,6** % par rapport à un pédalier circulaire.

- Que le cycliste qui réduit l'amplitude de pédalage à **50°**, améliore encore le rendement qui s'élève à 97 %, avec un rapport **0,97 / 0,64 = 1,5** soit un gain théorique de rendement de **+ 50 %** par rapport à un pédalier circulaire.

- Que finalement, le rendement tend vers **100 %** quand l'amplitude de pédalage tend vers zéro.

Concernant l'ergonomie, on observe que :

- les déplacements des pieds s'inscrivent en arc de cercle au dessus de l'axe du pédalier et donc exactement au-dessus de la roue directrice, sans entrer en conflit avec celle-ci ; ce qui permet d'abaisser au maximum le centre de gravité, et d'assurer le passage des genoux sous le guidon.

- le mouvement translatif des jambes offre peu de prise au vent.

Au départ, en position assise, avec un pied à terre, on engage l'autre pied dans le cale-pied automatique d'une pédale d'accès facile, puisqu'en position d'arrêt contre une butée, ou bloquée vers l'avant par la chaîne de traction en prise.

Pour démarrer, on exerce une poussée sur la pédale qui assure le démarrage, puis on engage l'autre pied sur l'autre pédale en position d'arrêt sur une butée, en vue de pédaler d'un mouvement alternatif des pieds.

Chaque nouvelle poussée alternée des jambes sur les pédales, d'une amplitude variable en fonction du choix de réglage des butées avant et arrière comprise entre **60** et **110°**, agit directement sur la chaîne de transmission continue.

Avec un pédalier à pédales oscillantes couplé à un jeu intermédiaire de pignons par exemple, qui donne un rapport **26 / 14 = 1.86** et un rapport de surmultiplication du pédalier multiplicateur de **3,38** en prenant quelques exemples de rapports extrêmes de plateaux et de pignons associés à des roues motrices de différents diamètres pour adultes et enfants, le calcul donne les développements finals équivalents à un tour théorique de manivelle, selon le tableau

EP 0 765 264 B1

comparatif ci-dessous :

| | rapport de pédalier | plateaux N dents | pignons de roue N dents | roue 450 x π en m | roue 400 x π en m | roue/enf 350 x π en m | développements finals extrêmes |
|---|---|---|---|---|---|---|---|
| (A) | 1,86 x | 32 : | 28 x | 1,41 m | - | - | 2,81 m |
| | 1,86 x | 42 : | 12 x | 1,41 m | - | - | 9,16 m |
| | 1,86 x | 34 : | 28 x | - | 1,26 m | - | 2,85 m |
| | 1,86 x | 42 : | 11 x | - | 1,26 m | - | 8,94 m |
| | 1,86 x | 34 : | 11 x | - | - | 1,10 m | 2,61 m |
| | 1,86 x | 42 : | 12 x | - | - | 1,10 m | 7,16 m |
| (B) | 3,38 x | 18 : | 28 x | 1,41 m | - | - | 3,06 m |
| | 3,38 x | 24 : | 12 x | 1,41 m | - | - | 9,53 m |
| | 3,38 x | 24 : | 11 x | 1,41 m | - | - | 10,40 m |
| | 3,38 x | 18 : | 28 x | - | 1.26 m | - | 2,73 m |
| | 3,38 x | 24 : | 12 x | - | 1,26 m | - | 8,78 m |
| | 3,38 x | 18 : | 28 x | - | - | 1,10 m | 2,65 m |
| | 3,38 x | 24 : | 12 x | - | - | 1,10 m | 7,43 m |
| C | 3.57 x | 20 : | 19 x | 1,41 m | x rapport moyen 0.59 | | 3.12 m |
| | 3.57 x | 20 : | 19 x | 1,41 m | x rapport moyen 1.68 | | 8.90 m |

(**A**) Pédalier oscillant (P.O.S) simple avec dérailleurs.
(**B**) Pédalier oscillant multiplicateur (P.O.M) avec dérailleurs.
        Le rapport de multiplication = Nombre de rotations angulaires de pédales / nombre de rotations angulaires des plateaux moteurs.
(**C**) Pédalier oscillant multiplicateur avec moyeu à 7 vitesses. Les systèmes de changement de vitesses utilisables sont les suivants :

    1) Systèmes à dérailleurs disponibles sur le marché avec chaîne, plateaux et pignons, pourront équiper les versions précédemment décrites.

    2) Systèmes à boite de cinq ou sept vitesses intégrées dans le moyeu que l'on trouve dans le commerce sous la marque SACHS notamment. Chacune de ces sept vitesses peut être modulée grâce à la faculté de variation d'amplitude et de fréquence de pédalage du pédalier, qui élargit la gamme de leur puissance.

Dans le cas correspondant à la figure **7**, le système de transmission se réduit à :

-    un plateau solo sur le pédalier oscillant multiplicateur.

-    un pignon solo sur la roue motrice équipée d'un moyeu à sept vitesses et d'une roue libre.

-    une chaîne de transmission sans fin invariante, dont la contrainte de traction avec le pédalier multiplicateur est divisé par **3,57** suivant notre exemple.

On peut, dans ces conditions, envisager de remplacer la chaîne traditionnelle de **1/2"** par une chaîne miniaturisée ou une courroie crantée, ou câble sans fin, entre deux poulies antiglisse.
Les avantages de ce système de transmission sont les suivants :

-    Extrême simplicité et esthétique épurée.

-    Gain sur le poids des masses en mouvement.

-    Encombrement miniature de la courroie ou du câble, pouvant être facilement dissimulé.

- Absence de chaîne et donc d'articulation mécanique, garantissant un fonctionnement silencieux sans vibration.

- Propreté sans graissage et absence d'entretien.

Les cale-pieds sont utiles pour assurer un appui confortable et performant des pieds et pour actionner le retour des pédales qui ne seraient pas équipées du retour automatique. Plusieurs types sont envisagés, selon les critères d'utilisation :

- La bicyclette de course : les cale-pieds automatiques ou à lanières sont recommandés avec un pédalier équipé d'un ressort d'équilibrage réglé pour la récupération d'énergie de traction des pédales en arrière. Dans ce cas, les pédales en position d'arrêt sont calées en avant en position basse (B).

- La bicyclette polyvalente : dans le cas d'utilisation de la bicyclette avec des chaussures de ville ordinaires, les cale-pieds pourront être du type élémentaire, à lanières réglables sur bandes velcro ou élastiques, voire à talonnière, agrippant les chaussures et permettant d'actionner plus ou moins le retour des pédales en fonction du réglage des ressorts d'équilibrage. Dans ce cas, les pédales en position d'arrêt sont calées en arrière sur les butées hautes (H).

Dans tous les cas, les ressorts d'équilibrage des pédales sont réglables en fonction des cale-pieds et des critères d'utilisation de la bicyclette.
Les manettes oscillantes **31** sont des organes mécaniques actionnés manuellement qui assurent conjointement :

- la fonction directrice classique d'un guidon sur la roue avant.

- la fonction motrice d'un guidon pourvu de manettes indépendantes, actionnables d'un mouvement oscillant en va-et-vient d'avant en arrière.

L'organe de propulsion manuelle, décrit dans la demande de brevet français n° **94 08289 (MAUCLAIR)** quel que soit le mode de transmission de la bicyclette, procure une motricité combinée avec les pédaliers oscillants situés, très opportunément et volontairement, à l'aplomb, et se compose de :

- La potence de direction.
- Le guidon à manettes oscillantes.
- Le système d'embrayage.
- Le système de transmission de la motricité des manettes oscillantes et sur le pédalier oscillant.

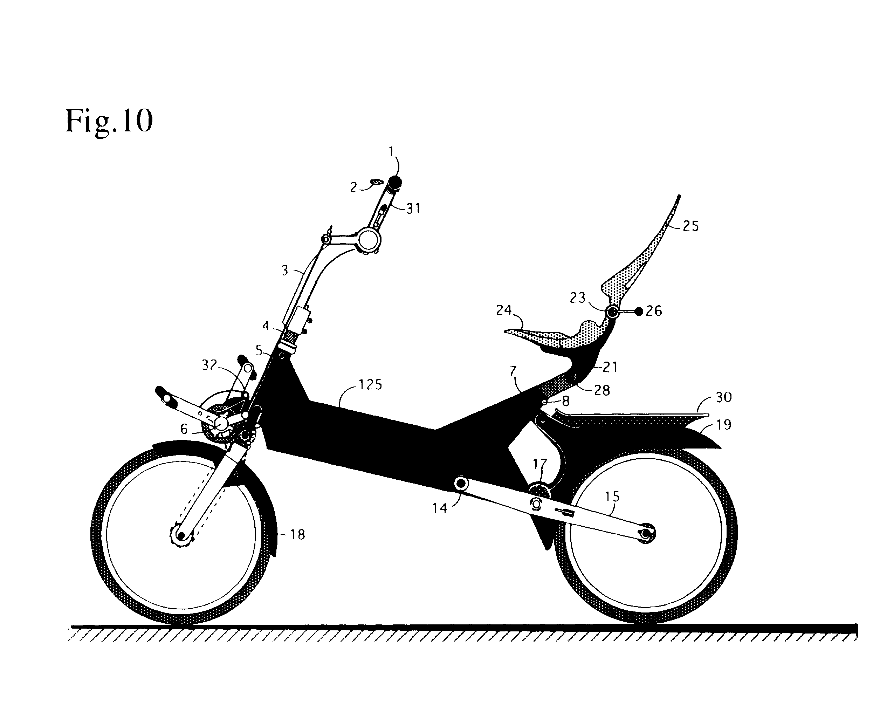

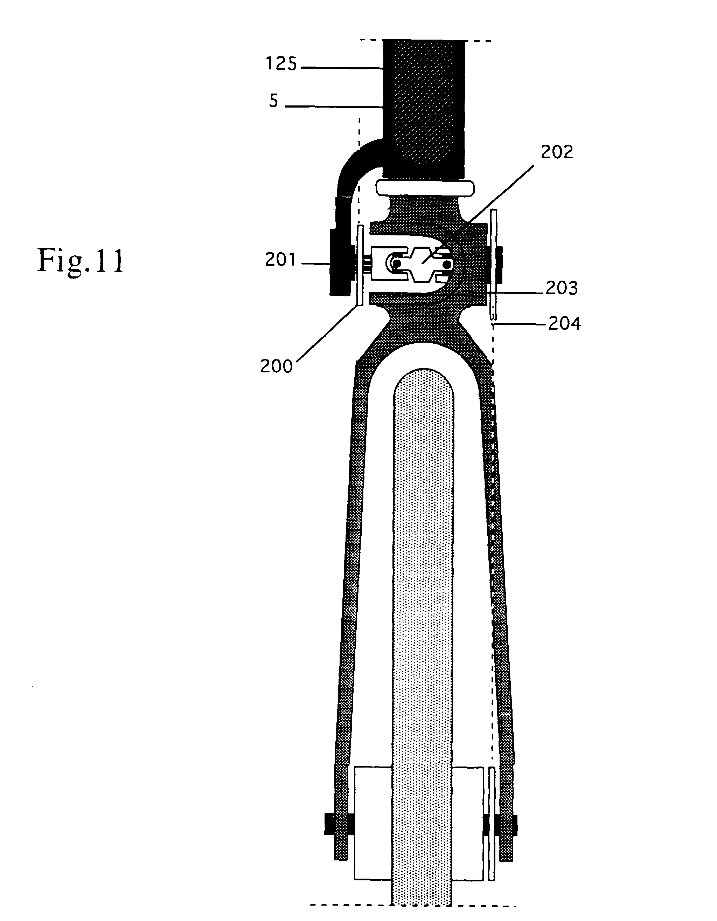

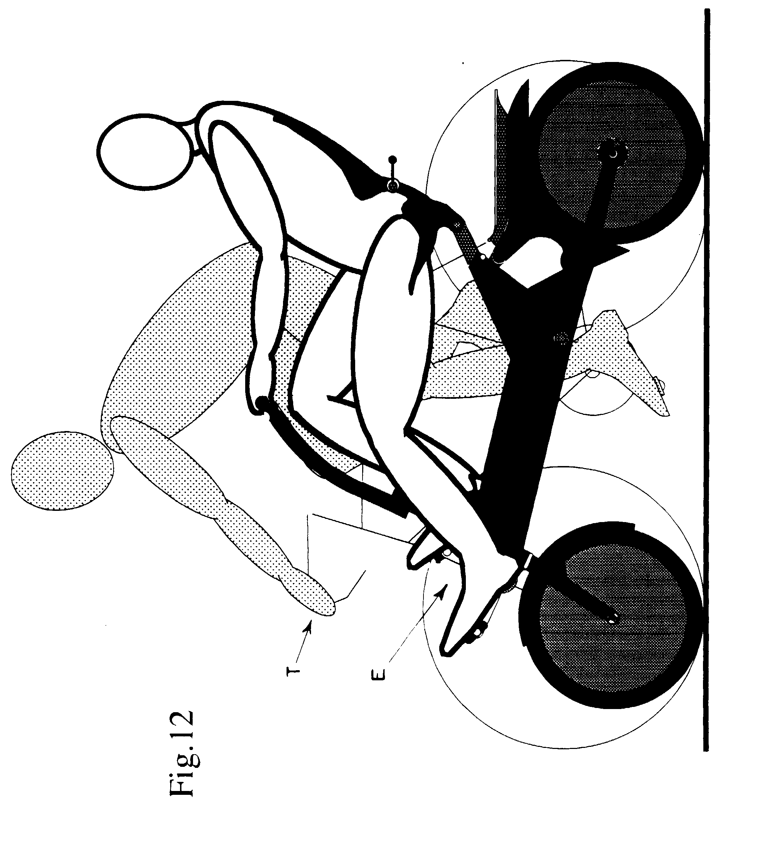

En se rapportant à la figure **11** on remarque que, dans la version traction sur la roue avant selon la figure **10**, le pédalier entraîne par chaîne la roue **200** située à gauche, dont l'axe d'entrée cannelé, monté sur un palier **201** solidaire du cadre **125** ou du tube de direction **5**, est équipé d'un joint de cardan homocinétique 202 qui traverse librement l'axe du tube de direction mobile 203 pourvu en conséquence d'un évidement de passage en forme de U horizontal, et dont l'arbre de sortie du cardan entraîne une roue dentée ou une poulie **204** située à droite, en rotation sur un moyeu solidaire du tube de direction mobile **203**. cette roue qui entraîne directement, par chaîne ou courroie dentée invariante, le moyeu de la roue avant a plusieurs vitesses.
L'examen de la figure **12**, permet de vérifier que les concepts ergonomiques et mécaniques adoptés par la bicyclette de la présente invention (**E**) sont à la fois novateurs, simples et bien adaptés à la morphologie humaine, comparativement à la bicyclette traditionnelle (**T**). Ces concepts procurent :

- une forte compacité de la machine avec l'avantage d'un faible encombrement,

- l'abaissement du centre de gravité de l'équipage fort apprécié en virage,

- le calage surélevé du siège par rapport au pédalier, ce dernier situé à une hauteur très raisonnable du sol,

- enfin la posture oblique et confortable du cycliste caractérisée par un appui dorsal diamétralement opposé au pédalier et une faible traînée aérodynamique.

## EP 0 765 264 B1

**Revendications**

1. Bicyclette ergonomique mue par pédales oscillantes, caractérisée en ce qu'elle comporte, un cadre profilé (121, 122, 123, 124, 125) équipé, sur l'avant d'un pédalier (6) positionné au ras de la roue avant et contre le tube de direction (5) d'un guidon (3) positionné au-dessus du pédalier (6) à hauteur des bras du cycliste et d'une fourche arrière, caractérisée en ce que ledit cadre est surmonté d'un tube de siège (7), équipé d'une selle (24) à dossier (25) fixe ou articulé orientable selon différentes positions, dont au moins une posture inclinée vers l'arrière, ledit pédalier est oscillant, à cliquet et comporte des manivelles indépendantes animées d'un mouvement limité oscillant en arc de cercle comprenant un aller moteur et un retour inversé à la position de départ.

2. Bicyclette selon la revendication 1, caractérisée en ce que le mouvement limité oscillant en arc de cercle des manivelles indépendantes a une amplitude comprise entre 30° et 110°.

3. Bicyclette selon la revendication 1 ou 2, caractérisée en ce que le cadre profilé (124) est constitué d'une poutre-caisson aérodynamique, dans laquelle sont intégrés les faisceaux électriques et les commandes, ainsi qu'un tube de direction (5), la console (6) du boîtier du pédalier oscillant, le tube de siège (7).

4. Bicyclette selon la revendication 1 ou 2, caractérisée en ce que le cadre profilé (124) est constitué d'une poutre caisson aérodynamique, dans laquelle sont intégrés les faisceaux électriques, la transmission et les commandes, ainsi qu'un tube de direction (5), la console (6) du boîtier du pédalier oscillant, le tube de siège (7), le boîtier d'articulation (14) de la fourche arrière et le garde-boue arrière (19).

5. Bicyclette selon la revendication 1 ou 2, caractérisée en ce que le cadre profilé (124) est constitué d'une poutre caisson aérodynamique, dans laquelle sont intégrés les faisceaux électriques, la transmission et les commandes, ainsi qu'un tube de direction (5), la console (6) du boîtier du pédalier oscillant, le tube de siège (7), le boîtier d'articulation (14) de la fourche arrière, le garde-boue arrière (19) et le porte-bagages (30).

6. Bicyclette selon l'une quelconque des revendications 3 à 5, caractérisée en ce que le cadre profilé (124) est réalisé en deux parties, reliées par une charnière (20) située en partie basse, dont les ailes s'emboîtent l'une dans l'autre avec solidarisation par verrouillage.

7. Bicyclette selon la revendication 6, caractérisée en ce qu'en situation repliée, la roue arrière vient se placer vers la fourche avant, à la place de la roue avant préalablement démontée.

8. Bicyclette selon la revendication 1 ou 2, caractérisée en ce que la structure est constituée d'un cadre tubulaire (121, 122) dont le tube de siège (7) est horizontal ou incliné selon un angle inférieur à 35° par rapport à l'horizontale et fendu à son extrémité et dans lequel coulisse la tige de selle bloquée en position par pincement de l'extrémité dudit tube par une vis ou d'une came (8).

9. Bicyclette selon la revendication 1 ou 2, caractérisée en ce que le cadre profilé (124) est constitué d'une structure tubulaire (123), dont le tube (7) est incliné et fendu à son extrémité pour assurer le blocage par pincement de la tige de selle par l'intermédiaire d'une vis ou d'une came (8).

10. Bicyclette selon la revendication 1 ou 2, caractérisée en ce que le dossier (25) est rabattable vers l'arrière, avec rappel automatique vers l'avant par l'intermédiaire d'une articulation (23) dotée d'un ressort de rappel constant, avec blocage selon trois positions principales, à l'aide d'une came actionnée par un levier (26).

11. Bicyclette selon la revendication 1 ou 2, caractérisée en que le pédalier oscillant est relié à la roue avant par l'intermédiaire d'un cardan homocinétique, d'un moyeu à changement de vitesse (9) et d'une transmission par pignons et chaîne.

12. Bicyclette se des revendications précédentes, caractérisée en ce que le cadre comporte sur l'arrière, une fourche articulée (15) à débattement limité vers le haut par un amortisseur (17).

13. Bicyclette selon la revendication 9, caractérisée en ce que la fourche arrière articulée (15) est constituée de deux bras en forme de diapason en cantilever, prenant appui intermédiaire sur une butée emboîtée sur un amortisseur (17) solidaire du cadre.

**14.** Bicyclette selon une des revendications précédentes, caractérisée en ce que les manettes constituant le guidon (3) sont oscillantes et combinables à volonté avec le pédalier oscillant.

**15.** Bicyclette selon une des revendications précédentes, caractérisée en ce que le dossier est orientable selon une position haute rapprochant les épaules du guidon manettier et facilitant le maniement des manettes d'avant en arrière.

**16.** Bicyclette selon une des revendications précédentes, caractérisée en ce que la traction s'effectue à l'arrière par un plateau et un dérailleur, le mouvement de traction étant transmis soit par une chaîne soit par une courroie crantée ou un câble sans fin.

**17.** Bicyclette selon une des revendications précédentes, caractérisée en ce que le cas d'une traction arrière et le boîtier d'articulation (14) sur lequel est articulée la suspension arrière est positionné près de la ligne de chaîne et le débattement de la roue arrière est limité de façon à neutraliser l'effet de pompage de la suspension.

**18.** Bicyclette selon la revendication 1, caractérisé en ce que le cadre profilé est auto-pliable, en faisant basculer la fourche arrière articulée autour du boîtier (14) afin de ramener la roue arrière vers la roue avant et contre le tube inférieur du cadre.

## Patentansprüche

**1.** Ergonomisches, mittels Schwingpedalen bewegtes Fahrrad, dadurch gekennzeichnet, daß es einen Profilrahmen (121, 122, 123, 124, 125) aufweist, der vorn mit einem auf der Höhe des Vorderrads angebrachten Tretkurbelantrieb (6) und an einem Steuerrohr (5) mit einem Lenker (3) versehen ist, welcher über dem Tretkurbelantrieb (6) in Höhe der Arme des Radfahrers angebracht ist, und der eine Hinterradgabel aufweist, dadurch gekennzeichnet, daß der Rahmen von einem Sitzrohr (7) überragt wird, welches mit einem Sattel (24) versehen ist, der eine feste oder gelenkige in verschiedene Stellungen bringbare Rückenlehne (25) aufweist, wobei mindestens eine Stellung nach hinten geneigt ist und wobei der Tretkurbelantrieb hin- und herschwingt, mit einer Sperre versehen ist und unabhängige Kurbeln enthält, die mit einer begrenzten, kreisbogenförmigen Schwingbewegung angetrieben werden, welche einen treibenden Vorlauf und einen umgekehrten Rücklauf zur Ausgangsstellung enthält.

**2.** Fahrrad nach Anspruch 1, dadurch gekennzeichnet, daß die begrenzte, kreisbogenförmige Schwingbewegung der unabhängigen Kurbeln eine Amplitude zwischen 30° und 110° aufweist.

**3.** Fahrrad nach Anspruch 1 oder 2, dadurch gekennzeichnet, daß der Profilrahmen (124) aus einem aerodynamischen Kastenträger besteht, in welchem die elektrischen Leitungen und die Steuerungen sowie ein Steuerrohr (5), der Träger (6) des Gehäuses des Schwingtretkurbelantriebs und das Sitzrohr (7) integriert sind.

**4.** Fahrrad nach Anspruch 1 oder 2, dadurch gekennzeichnet, daß der Profilrahmen (124) aus einem aerodynamischen Kastenträger besteht, in welchem die elektrischen Leitungen, die Kraftübertragung und die Steuerungen sowie ein Steuerrohr (5), der Träger (6) des Gehäuses des Schwingtretkurbelantriebs, das Sitzrohr (7), das Gelenkgehäuse (14) der Hinterradgabel und das hintere Schutzblech (19) integriert sind.

**5.** Fahrrad nach Anspruch 1 oder 2, dadurch gekennzeichnet, daß der Profilrahmen (124) aus einem aerodynamischen Kastenträger besteht, in welchem die elektrischen Leitungen, die Kraftübertragung und die Steuerungen sowie ein Steuerrohr (5), der Träger (6) des Gehäuses des Schwingtretkurbelantriebs, das Sitzrohr (7), das Gelenkgehäuse (14) der Hinterradgabel, das hintere Schutzblech (19) und der Gepäckträger (30) integriert sind.

**6.** Fahrrad nach einem der Ansprüche 3 bis 5, dadurch gekennzeichnet, daß der Profilrahmen (124) aus zwei Teilen besteht, die durch ein am unteren Teil befindliches Scharnier (20) verbunden sind, dessen Schenkel mit Verriegelung ineinandergreifen.

**7.** Fahrrad nach Anspruch 6, dadurch gekennzeichnet, daß im zusammengeklappten Zustand das Hinterrad zur Vorderradgabel an die Stelle des zuvor abmontieren Vorderrads gelangt.

**8.** Fahrrad nach Anspruch 1 oder 2, dadurch gekennzeichnet, daß der Aufbau aus einem rohrförmigen Rahmen (121, 122) besteht, dessen Sitzrohr (7) waagrecht oder in einem kleineren Winkel als 35° gegenüber der Waagrechten geneigt ist und an seinem Ende einen Schlitz aufweist, und in dem der Sattelschaft gleitet, der durch Einklemmen des Rohrendes mittels einer Schraube oder eines Nockens (8) in seiner Stellung gesichert ist.

9. Fahrrad nach Anspruch 1 oder 2, dadurch gekennzeichnet, daß der Profilrahmen (124) aus einem rohrförmigen Aufbau (123) besteht, dessen Rohr (7) geneigt ist und an seinem Ende einen Schlitz aufweist, um den Sattelschaft mittels einer Schraube oder eines Nockens (8) durch Einklemmen zu sichern.

10. Fahrrad nach Anspruch 1 oder 2, dadurch gekennzeichnet, daß die Rückenlehne (25) nach hinten mit automatischer Rückführung nach vorn durch ein Gelenk (23) umklappbar ist, das mit einer konstanten Rückholfeder versehen ist, mit Sicherung in drei Grundstellungen mit Hilfe eines durch einen Hebel (26) betätigten Nockens.

11. Fahrrad nach Anspruch 1 oder 2, dadurch gekennzeichnet, daß der Schwingtretkurbelantrieb durch ein homokinematisches Kardangelenk, eine Gangschaltungsnabe (9) und eine Kraftübertragung mit Ritzel und Kette mit dem Vorderrad verbunden ist.

12. Fahrrad nach einem der vorhergehenden Ansprüche, dadurch gekennzeichnet, daß der Rahmen hinten eine Gelenkgabel (15) mit durch einen Dämpfer (17) nach oben begrenztem Federungsweg enthält.

13. Fahrrad nach Anspruch 9, dadurch gekennzeichnet, daß die hintere Gelenkgabel (15) aus zwei stimmgabelartigen Auslegerschenkeln besteht, die sich an einem Anschlag abstützen, der in den am Rahmen befestigen Dämpfer (17) eingefügt ist.

14. Fahrrad nach einem der vorhergehenden Ansprüche, dadurch gekennzeichnet, daß die den Lenker (3) bildenden Griffe schwenkbar und wahlweise mit dem Schwingtretkurbelantrieb kombinierbar sind.

15. Fahrrad nach einem der vorhergehenden Ansprüche, dadurch gekennzeichnet, daß die Rückenlehne in eine obere Stellung bringbar ist, in der die Schultern zum Griff lenker angenähert sind und die Handhabung der Griffe von vorne nach hinten erleichtert.

16. Fahrrad nach einem der vorhergehenden Ansprüche, dadurch gekennzeichnet, daß der Antrieb hinten durch eine Scheibe und eine Kettenschaltung erfolgt, wobei die Antriebsbewegung entweder durch eine Kette oder einen Zahnriemen oder ein Umlaufseil übertragen wird.

17. Fahrrad nach einem der vorhergehenden Ansprüche, dadurch gekennzeichnet, daß bei einem Hinterradantrieb das Gelenkgehäuse (14), an dem die hintere Aufhängung angelenkt ist nahe der Kettenlinie angebracht ist und die Auslenkung des Hinterrads so begrenzt ist, daß die Pumpwirkung der Federung aufgehoben wird.

18. Fahrrad nach Anspruch 1, dadurch gekennzeichnet, daß der Profilrahmen automatisch zusammenklappbar ist, indem die Hinterradgelenkgabel um das Gehäuse (14) verschwenkt wird, um die Hinterradgabel zur Vorderradgabel und in Anlage an das untere Rohr des Rahmens zu bringen.

## Claims

1. Ergonomic bicycle set in motion by oscillating pedals, characterised in that it comprises a profiled frame (121, 122, 123, 124, 125) equipped at the front with a chain transmission (6) positioned level with the front wheel and against the steering tube (5) of handlebars (3) positioned above the chain transmission (6) at the height of the arms of the cyclist and a rear fork, characterised in that said frame is topped with a seat tube (7), equipped with a saddle (24) with a fixed or articulated back (25) that can be oriented in different positions, at least one of which is an inclined rearward posture, said chain transmission is an oscillating, ratchet-type, and comprises independent cranks driven with a limited movement oscillating in an arc of a circle comprising a driving forward movement a reversed return to the start position.

2. Bicycle according to Claim 1, characterised in that the limited oscillating movement in an arc of a circle of the independent cranks has an amplitude comprising between 30° and 110°.

3. Bicycle according to Claim 1 or 2, characterised in that the profiled frame (124) is constituted by an aerodynamic box-structure beam, in which are incorporated the electrical bundles and the controls, as well as a steering tube (5), the bracket (6) of the casing of the oscillating chain transmission, the seat tube (7).

4. Bicycle according to Claim 1 or 2, characterised in that the profiled frame (124) is constituted by an aerodynamic box-structure beam, in which are incorporated the electrical bundles, the drive and the controls, as well as a steering tube (5), the bracket (6) of the casing of the oscillating chain transmission, the seat tube (7), the articulation casing (14) of the rear fork and the rear mudguard (19).

5. Bicycle according to Claim 1 or 2, characterised in that the profiled frame (124) is constituted by an aerodynamic box-structure beam, in which are incorporated the electrical bundles, the drive and the controls, as well as a steering tube (5), the bracket (6) of the casing of the oscillating chain transmission, the seat tube (7), the articulation casing (14) of the rear fork, the rear mudguard (19) and the luggage carrier (30).

6. Bicycle according to any one of Claims 3 to 5, characterised in that the profiled frame (124) is made in two portions, connected by a hinge (20) located in the lower portion, the flanges of which fit inside each other and are held firmly by bolting.

7. Bicycle according to Claim 6, characterised in that, in the folded position, the rear wheel is moved towards the front fork, in place of the front wheel, which has previously been removed.

8. Bicycle according to Claim 1 or 2, characterised in that the structure is constituted by a tubular frame (121, 122), the seat tube (7) of which is horizontal or inclined at an angle of less than 35° relative to the horizontal and split at its end and inside which slides the saddle rod, locked in position by pinching the end of said tube by a screw or by a cam (8).

9. Bicycle according to Claim 1 or 2, characterised in that the profiled frame (124) is constituted by a tubular structure (123), the tube (7) of which is inclined and split at its end so as to ensure locking by pinching of the saddle rod via a screw or a cam (8).

10. Bicycle according to Claim 1 or 2, characterised in that the seat back (25) can be folded backwards, with automatic return forwards via an articulation (23) provided with a constant return spring, and can be locked in three main positions, with the aid of a cam actuated by a lever (26).

11. Bicycle according to Claim 1 or 2, characterised in that the oscillating chain transmission is connected to the front wheel via a homokinetic cardan coupling of a gear-change hub (9) and a sprocket-and-chain drive.

12. Bicycle [according to one] of the previous claims, characterised in that the frame comprises, at the rear, an articulated fork (15) with upwards clearance limited by a damper (17).

13. Bicycle according to Claim 9, characterised in that the articulated rear fork (15) is constituted by two arms in the form of a cantilevered tuning fork, bearing intermediately on a thrust bearing fitted over a damper (17) fixed to the frame.

14. Bicycle according to one of the preceding claims, characterised in that the handles constituting the handlebars (3) are oscillating and can be combined if wished with the oscillating chain transmission.

15. Bicycle according to one of the preceding claims, characterised in that the seat back can be oriented in a high position approaching the shoulders of the handlebars handles and facilitating the backward manoeuvring of the handles.

16. Bicycle according to one of the preceding claims, characterised in that traction is effected at the rear by a chain-wheel and a derailleur, the traction movement being transmitted either by a chain or by a notched belt or an endless cable.

17. Bicycle according to one of the preceding claims, characterised in that the case of a rear traction and the articulation casing (14) on which the rear suspension is articulated is positioned near the chain line and the clearance of the rear wheel is limited so as to neutralise the pumping effect of the suspension.

18. Bicycle according to Claim 1, characterised in that the profiled frame is self-folding, by causing the articulated rear fork to swing around the casing (14) so as to bring the rear wheel towards the front wheel and against the lower tube of the frame.

Fig.1

EP 0 765 264 B1

Fig.2

Fig.4

Fig.3

Fig.5

Fig.6

EP 0 765 264 B1

Fig.7

EP 0 765 264 B1

Fig.9

Fig.8

Fig.10

EP 0 765 264 B1

Fig.11

Fig.12